# EUROPEAN PATENT SPECIFICATION

(11) **EP 1 805 961 B1**
(45) Date of publication and mention of the grant of the patent: **05.12.2012**
(21) Application number: 04793878.2
(22) Date of filing: 29.10.2004
(51) Int. Cl.: H04W 40/02, H04L 12/46, H04L 12/56, H04L 29/06

(54) **METHODS AND NODES IN A COMMUNICATION SYSTEM FOR CONTROLLING THE USE OF ACCESS RESOURCES**
VERFAHREN UND KNOTEN IN EINEM KOMMUNIKATIONSSYSTEM ZUR STEUERUNG DER VERWENDUNG VON ZUGANGSRESSOURCEN
PROCEDES ET NOEUDS DANS UN SYSTEME DE COMMUNICATION POUR LE CONTROLE DE L'UTILISATION DE RESSOURCES D'ACCES

(43) Date of publication of application: 11.07.2007
(73) Proprietor: Telefonaktiebolaget L M Ericsson (publ), 164 83 Stockholm (SE)
(72) Inventor: RUNE, Johan, S-181 30 Lidingö (SE); LARSSON, Tony, S-194 76 Upplands Väsby (SE); PETTERSSON, Mattias, S-222 40 Lund (SE)
(74) Representative: Egrelius, Fredrik
(86) International application number: PCT/SE2004/001578
(87) International publication number: WO 2006/046896

(56) References cited:
- US-A1- 2003 095 522
- US-A1- 2004 029 555
- US-A1- 2004 208 153
- WAKIKAWA R.: 'Multiple Care-of Adresses Registration' INTERNET DRAFT, [Online] 19 June 2004, pages 1 - 27, XP015036592 Retrieved from the Internet: <URL:http://www.watersprings.org/pub/id/dra ft-wakikawa-mobileip-multiplecoa-03.txt>

## Description

### FIELD OF THE INVENTION

The present invention relates to communication systems and methods, and more particularly it relates to communication systems and methods for controlling the use of access resources accessible by a mobile node or a mobile network.

### BACKGROUND OF THE INVENTION

In communication systems based on packet data communication, for example based on the Internet Protocol (IP), there is a need for a mobile communication node to be able to communicate with a fixed network infrastructure even when the mobile communication node moves such that it changes its point of attachment to the fixed network infrastructure: The mobile communication node could for example move such that it needs to change from communicating with a first access point belonging to a first Wireless Local Area Network (WLAN) to communicating with a second access point belonging to a second WLAN.

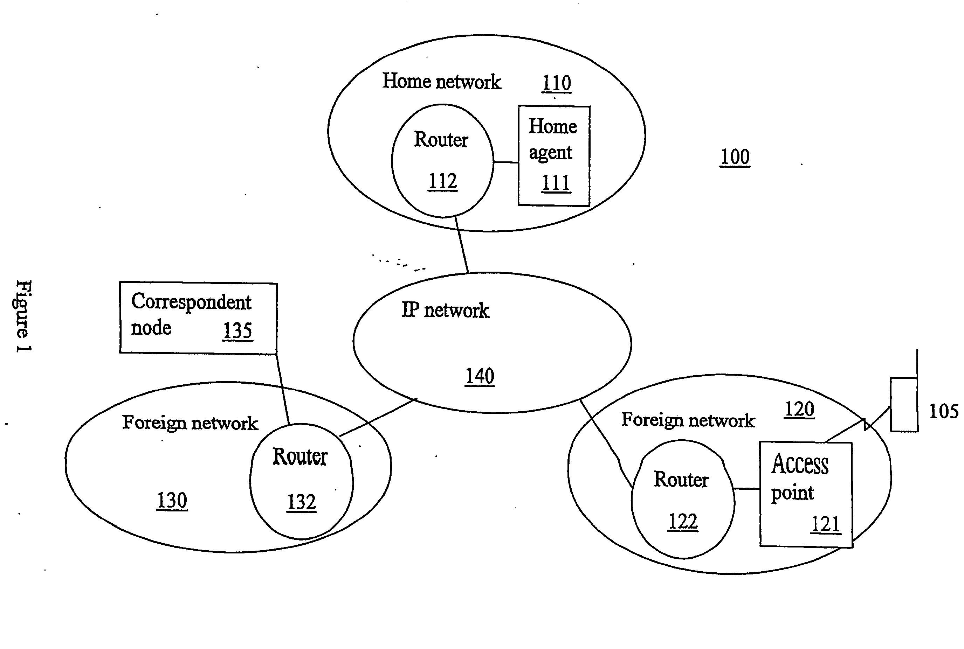

Mobile IPv6 and Mobile IPv4 are prior art protocols enabling such mobility in IPv6 based and IPv4 based networks, respectively. Mobile IPv6 is described e.g. in the document "Mobility Support in IPv6" by D. Johnson et al, RFC3775, published on the Internet by the Network Working Group in June 2 004. The process for achieving mobility in an IPv4 system is similar to the process for an IPv6 system. The major differences between Mobile IPv4 and Mobile IPv6 is that in mobile IPv4 the messages Binding Update and Binding Acknowledge in Mobile IPv6 explained below are called Registration Request and Registration Reply, respectively. Also, in the Mobile IPv4 based system, there may be an additional node called Foreign Agent involved. Figure 1 shows a Mobile IPv6 based system and below is explained how mobility is achieved for a mobile communication node in such a Mobile IPv6 based system. The mobile communication node 105, which could be any communication device, for example a laptop or a mobile phone, has its original point of attachment to a home network 110, which home network has a Home Agent 111 and a Router 112. Thus, the mobile communication node has a stable home address belonging to the address spaoe of the home network. Figure 1 also shows a first foreign network 120 having at least one Access Point 121 and an access router 122, and a second foreign network 130 comprising an access router 132 and a correspondent node 135 connected to the Access Router 132. All networks are connected via an IP network 140, e.g. the Internet. In a scenario, the mobile communication node 105 is in its home network 110 and has established a connection to the correspondent node 135 connected to the second foreign network 130. The mobile communication node then moves from the home network to the first foreign network 120. The mobile communication node will then, according to Mobile IPv6, send a Binding Update (BU) message (which corresponds to a Registration Request in Mobile IPv4) via the first foreign network to the Home Agent 111 of the home network 110 informing the Home Agent of the mobile node's new address, i.e. it's care-of address in the first foreign network. Thereafter, the Home Agent 111 sends a Binding Acknowledge message (which corresponds to a Registration Reply in Mobile IPv4) to the mobile communication node and a tunnel is established between the mobile communication node and the Home Agent, via the IP network 140. On the mobile communication node endpoint the tunnel has the mobile communication node's care-of address as its outer address and the mobile communication node's home address as the inner address. The following traffic between the mobile communication node and the correspondent node 135 will then transit through the tunnel to the Home network and further to the correspondent node in the foreign network such that the previous connection between the mobile communication node and the correspondent node is preserved. Packets in the other direction, originating from the correspondent node 135, are addressed to the home address of the mobile communication node 105, intercepted by the Home Agent 11 1 and forwarded through the tunnel to the mobile communication node 105. In case of Mobile IPv4 the access router 122 in the first foreign network 120 may also act as a Foreign Agent through which all Mobile IPv4 communication between the mobile node 105 and its Home Agent 111 passes. In such case the tunnel is established between the Foreign Agent and the Home Agent instead of between the mobile communication node and the Home Agent. The Foreign Agent then forwards packets coming out of the tunnel to the mobile node 105 and forwards packets from the mobile node 105 through the tunnel towards the Home Agent 111. Furthermore, in Mobile IPv6 a route optimisation mechanism can be used to allow direct communication between the mobile communication node 105 and the correspondent node 135.

In another scenario not just a mobile communication node may be moving, but a whole network, for example a network within a transport vehicle (e.g. bus, train or airplane). In this case, the moving network will have a router through which all communication nodes in the moving network can communicate. In the case of a moving network on e.g, an airplane, the moving network will comprise communication nodes, which may be different users' communication devices, such as laptops, mobile phones, PDAs (Personal Digital Assistance) etc., which communication nodes communicate with the router within the airplane, such that all communication destined to an external address will pass via the router. A mobile network may also be e.g. a Personal Area Network (PAN), wherein a PAN comprises all communication devices belonging to a user and situated within short range radio communication distance form each other, see for example co-pending patent publication WO 2006/001736.

"The Network Mobility (NEMO) Basic Support Protocol", by Devarapalli et al, published June 2004 as an Internet Draft, which is a working document of the Internet Engineering Task Force, is a protocol that enables a mobile network to attach to different points in the Internet. The protocol is an extension of Mobile IPv6 and allows session continuity for every communication node (or communication device) in the mobile network as the network moves. It allows a mobile router to maintain a stable network prefix for a moving network, even as the mobile router changes its, and thus the moving network's, point of attachment to a fixed network infrastructure. This prefix stability is achieved through a solution similar to the mobile IPv6 solution, by making a home agent (HA) a fixed point of attachment for the Mobile Router (MR) and maintaining connectivity between the HA and the MR through a tunnel. The prefix is allocated from the address range of the home network, and can thus remain the same even as the MR and its network move. When the MR attaches to a network in a new location, it acquires a new care-of address, but its home address and prefix are unchanged. However, just like in Mobile IPv6 the MR has to register its new care-of address in the HA in order to maintain the tunnel between the Mobile Router and the Home Agent.

The communication nodes belonging to the network cluster that moves along with the mobile router are called Mobile Network Nodes (MNNs). In the NEMO basic support they will not change their configuration as the MR changes its point of attachment. In other words, the mobility is transparent to them.

If, in the current NEMO solution, a bad tunnel is experienced, it will be replaced by a new tunnel by performing a new registration with the HA, this time with a different care-of address, unless the tunnel is re-established through the same interface and point of attachment, and possibly configured on a different interface, depending on the nature of the tunnel problems. If a communication node could get Internet access through multiple access media simultaneously, i.e. could have multiple tunnels established simultaneously, a data flow could be moved from a bad tunnel to a good tunnel much quicker than if only one tunnel at a time can be established. Also, for matters of cost, bandwidth, delay etc. it could be useful for a communication node to get Internet access through multiple simultaneous tunnels. However, the NEMO basic support protocol does not allow this because it allows only a single care-of address to be registered in the Home Agent (HA) for a certain Mobile Router (MR) at any one time. Multiple simultaneous care-of addresses are not allowed and thus multiple simultaneous accesses and MR-HA tunnels are not possible for a MR.

However, in the prior art document "Multiple Care-of Addresses Registration", draft-wakikawa-mobileip-multiplecoa-03.txt, by Wakikawa et al, an Internet Draft published 19 June 2004 as a working document of the IETF, a Mobile IPv6 and NEMO basic support protocol extension is proposed allowing multiple care-of addresses to a single communication node or to a mobile router, which would make it possible to use different tunnels simultaneously. This is accomplished by a new identification number carried in each binding, i.e. for each different access interface that could be used by the mobile router.

When many different accesses are available simultaneously to a mobile network via different tunnels as described above, it would be advantageous if the use of the resources of the different accesses could be managed such that the access resources are efficiently used for the mobile network. However, the extension to the NEMO basic support protocol does not describe any such possibility. Consequently, there exists a need for a solution that can manage different access resources simultaneously accessible by a mobile network. In a similar fashion there exists a need for a solution that can manage different access resources simultaneously accessible by a single mobile communication node, wherein a single mobile communication node being a communication node that is directly connecting to any of the different access resources, and not via a separate router as for a communication node belonging to a mobile network.

The term flow or data flow used in the application is a loose term for a connection between two end nodes. A flow between a first and a second end node may have two directions: from the first node to the second node and vice versa. Thus, in the application, a data flow comprises an uplink part and a downlink part, wherein the uplink part is in the direction from the mobile communication node to the home agent (and further to the correspondent node), and the downlink part is in the direction from the home agent to the mobile communication node. A TCP (Transmission Control Protocol) connection is typically seen as a flow. A node can have multiple flows towards different correspondent nodes and also multiple flows towards the same correspondent node. A flow is typically defined by the source and destination IP addresses and port numbers, plus the transport protocol in use, such as TCP or UDP (User Datagram Protocol). It is also possible to instead define a flow by its flow label (in IPv6) or its SPI (Security Parameter Index) together with the source and destination IP addresses, and the protocol in case of the SPI. The flow label is more specific than the port numbers and should have precedence over them. The SPI is used in IPsec (IP security as defined in RFC 2401 "Security Architecture for the Internet Protocol"), together with the destination IP address and the protocol to identify the security association, and the SPI-destination address-protocol triplet is typically used as a (unidirectional) flow identifier when the packet is encrypted and the port numbers are visible only to the receiving end-node.

### SUMMARY OF THE INVENTION

The object of the invention is to achieve a solution for managing the use of simultaneously accessible access resources connecting a mobile router and a home agent in a home network by means of a tunnel in each access resource, such that it is controlled which access resource a data packet travelling in any direction between the mobile router and the home agent is using.

The above stated object is achieved by means of a method for a mobile router according to claim 1, a method for a home agent according to claim 9, a mobile router according to claim 17, a home agent according to claim 25 and computer program product according to claims 32 and 33.

The solution according to the present invention achieves the above mentioned object by having the mobile router controlling the use of the access resources both for data packets sent in the direction to the home agent and for data packets sent from the home agent to the mobile router. For this reason, the mobile router classifies a data packet based on information in the packet and selects an access resource for sending the packet based on the classification. The mobile router also sends implicit or explicit information to the home agent regarding routing of data packets from the home agent to the mobile router, such that the home agent classifies these data packets and selects access resource for sending the data packets based on the information received from the mobile router.

According to a first aspect of the invention, a method is provided in a mobile router for routing a data packet originating from a communication node to a home agent in a home network of the mobile router. The mobile router has ability to access at least two different external accesses simultaneously, through which accesses one tunnel each is set up to the home agent in the home network. The method comprises the steps of:
classifying the data packet according to information in the data packet;
selecting one of the at least two external accesses to be used for sending she data packet based on the classification of the packet;
sending the data packet from the mobile router to the home agent via the selected external access.

According to a second aspect of the invention, a method is provided in a home agent in a home network of a mobile router for routing a first data packet originating from a correspondent communication node to the mobile router, wherein the mobile router has ability to access at least two different external accesses simultaneously, through which one tunnel each is set up to the home agent. The method comprises the steps of:
receiving information from the mobile router regarding routing of the first data packet;
storing the information received from the mobile router regarding routing of the first data packet;
classifying the first data packet according to identification information of the first data packet and according to the stored information;
selecting one of the at least two different tunnels for sending the first data- packet based on the classification, and
sending the first data packet to the mobile router (204) via the selected tunnel.

According to a third aspect of the invention, a mobile router is provided in a mobile communication system, wherein the mobile router is adapted for sending a data packet originating from a communication node in connection with the mobile router to a home agent in a home network of the mobile router. The mobile router has ability to access at least two different external accesses simultaneously, through which accesses one tunnel each is set up to the home agent. The mobile router comprises:
means for classifying the data packet according to information in the data packet;
means for selecting one of the at least two external accesses to be used for sending the data packet based on the classification of the packet;
means for sending the data packet to the home agent via the selected external access.

According to a fourth aspect of the invention, a home agent is provided in a communication system, wherein the home agent belongs to a home network of a mobile router, and wherein the home agent is adapted for routing a first data packet originating from a correspondent communication node to the mobile router. The mobile router has ability to access at least two different external accesses simultaneously, through which one tunnel each is set up to the home agent. The home agent comprises:
means for receiving information from the mobile router regarding routing of the first data packet;
means for storing the information received from the mobile router regarding routing of the first data packet;
means for classifying the first data packet according to identification information of the first data packet and according to the stored information;
means for selecting one of the at least two different tunnels for sending the first data packet based on the classification, and
means for sending the first data packet to the mobile router via the selected tunnel.

According to a preferred embodiment of the invention, the mobile router, in addition to classifying the data packet according to information in the data packet, also classifies the data packet according to policies configured and stored in the mobile router.

An advantage of the invention is that with multiple simultaneously accessible tunnels, a flow could be moved from a bad to a good tunnel much quicker than if only one tunnel is accessible at a time.

Another advantage of the present invention is that it makes it possible to differentiate traffic belonging to different flows over different accesses. It will also be possible to differentiate traffic over different accesses depending on e.g. the type of mobile network node or the type of subscription that the mobile network node has.

Yet another advantage of the invention lies in that it allows the mobile router and the home agent to have multiple active tunnels to increase throughput, provide better redundancy and to be able to load-balance the traffic without downgrading e.g. transport layer characteristics.

A further advantage of the invention is that it allows the mobile router (or the single communication node) to make all decisions on over what access each particular flow is routed. The home agent will follow the mobile router's (or the single communication node's) decisions. The mobile router's decisions will be transparent to the mobile network nodes such that the mobile network nodes will not have to support multiple accesses that are available to the moving network, while still being able to use them. Further advantages of embodiments of the present invention will become apparent when reading the following detailed description in conjunction with the drawings.

### BRIEF DESCRIPTION OF THE DRAWINGS

Figure 1 shows a schematic block diagram of a communication system according to prior art.
Figure 2 illustrates a schematic block diagram of a communication system wherein the present invention can be used.
Figure 3 shows a schematic block diagram of a Mobile Router according to an embodiment of the invention.
Figure 4 shows a schematic block diagram of a Home Agent according to an embodiment of the invention.
Figure 5 shows a flow chart according to a method of the invention used in a Mobile Router.
Figure 6 shows a flow chart according to a method of the invention used in a Home Agent.

### DETAILED DESCRIPTION

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

The invention deals with a routing function, which means selecting an access to be used for a packet and sending the packet via the selected access.

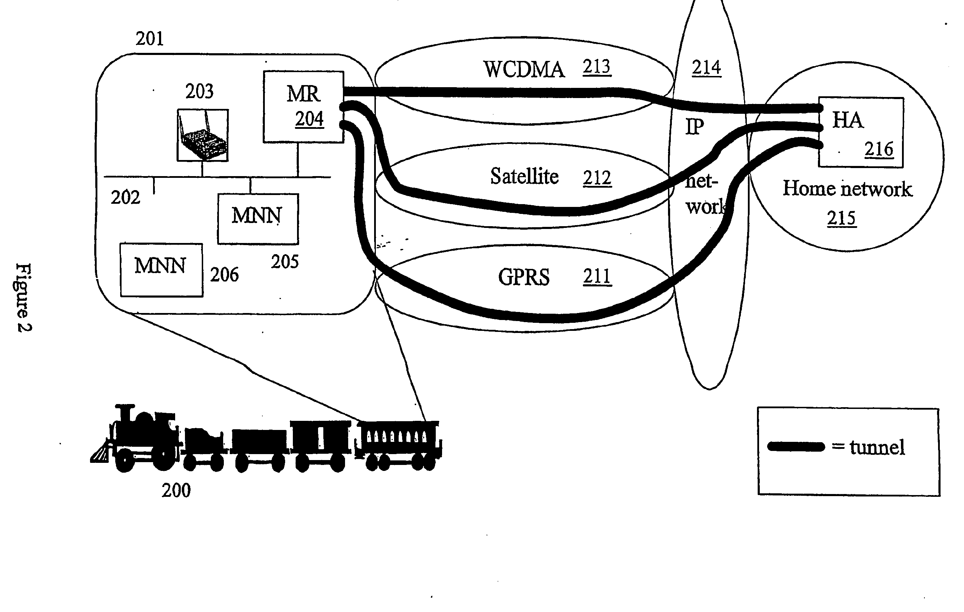

Figure 2 shows a schematic block diagram of a communication system having a Vehicle Area Network (VAN) 201 and multiple external network accesses for the VAN, wherein the system can be controlled according to the invention. A VAN is an example of a moving network for which the present invention can be used. The VAN 201 is in this case situated on a train 200, which may be moving. The VAN may be some sort of switched Ethernet that may have either Ethernet ports 202 or WLAN access points 203 or a combination of Ethernet ports and WLAN access points (as shown in the figure). Mobile network nodes (MNNs) 205, 206 may connect to an Ethernet port or to a WLAN access point. The mobile network nodes may be any communication node such as laptops or mobile phones belonging to persons travelling on the train. The VAN also has a Mobile Router (MR) 204, which acts as a default gateway for all MNNs inside the vehicle. The mobile router 204 is responsible for mobility management for the entire VAN 201, i.e. mobility management is totally transparent to the MNNs 205, 206 entering the vehicle. This means that no new requirements are put on the MNNs when joining the VAN. The external network accesses for the VAN comprise one or several different access technologies, in figure 2 exemplified by the radio access technologies General Packet Radio Service (GPRS) 211, Wideband Code Division Multiple Access (WCDMA) 213, and satellite radio communication 212. Each of these access technologies is available via geographically distributed access points belonging to each access technology, as is well known in the art. One or several of these access technologies can be available at the same time depending on for instance coverage and operator policies. Each access technology may as well have several different accesses. Figure 2 also shows a Home Agent (HA) 216 in a home network 215, which is the home network for the MR. Communication from any of the MNNs and destined for e.g. a correspondent node in a foreign network (or communication in the opposite direction) is routed via any of the access networks, an IP network 214 and via the home agent 216 in the home network 215. For the communication to be able to use any of the available external accesses, the mobile router 204 will need to setup one tunnel to the home agent 216 for each available external access. The example in figure 2 shows three tunnels between the mobile router 204 and the home agent 216, one for each of the three access technologies 211, 212, 213.

There are several reasons motivating why support for simultaneous usage of several accesses would be beneficial in this scenario:
- It would be possible to handle the dynamic nature of the external access links, i.e. links will go up and down depending on access technology and coverage. This means that the mobile router in the vehicle must be able to move traffic between the different accesses when for instance one link goes down. An important case related to this is when the new access must be activated before the traffic can be moved to that particular access, e.g. the satellite access can be a back-up access to the other accesses and is in that case only activated when all other accesses are unavailable;
- Simultaneous use of multiple external accesses means more bandwidth to the users in the vehicle. It must therefore be possible to make use of these accesses at the same time, but also to do load-sharing using different load-sharing algorithms;
- An end-user may have special requirements and may want to be able to control which external access to use.

Therefore, the solution according to the invention suggests having the mobile router controlling the usage of the different external accesses such that these accesses are used in an efficient way to enable good communication possibilities for the mobile network nodes (MNNs).

To achieve this, the Mobile Router (MR) according to the invention classifies the data packets sent from the MNNs and selects one of the available accesses for each uplink part of a flow. The MR also instructs, implicitly or explicitly, the HA how to classify packets and how to select access, regarding data going in the direction to the MNNs, i.e. regarding the downlink part of each flow.

The MR is a good point in the network to perform this type of flow management, because the MR is aware of and can monitor the available accesses and because most connections are initiated from the MNNs (i.e. at the connection end-point at the MR side of the external access link). In contrast, the MNNs themselves are generally not aware of the available accesses and they are certainly not aware of the current load of the accesses and the current mix of flows to and from the moving network. Even if the MNNs (or their users) may find it useful to select a certain access for a certain flow, no prior art means, i.e. protocols, to indicate such selections are available, except off-line means such as subscription profiles. Likewise, the Home Agent (HA) is also in a worse position than the MR to select tunnels or external accesses for different flows, because the HA is not aware of what access(es) the MR is using and because different routing policies may be applied in different moving networks (i.e. by different MRs).

The flow classification and the access selection are based on information in the data packet and on policies that are configured in the MR, e.g. including subscription profiles, access classifications, selection principles, load-sharing algorithms, etc. A policy may either be statically configured by e.g. the operator, regarding for example how and if load sharing is to be used and which access selection principles that shall be used, or the policy may be dynamically configured, regarding for example the load sharing and access selection principles that are going to be used for the moment. Any user preferences may also be used in a policy.

Before data can be sent, a tunnel has to be created for each external access. For this reason, the MR will try to create a care-of address on each interface that has connectivity to the fixed infrastructure, i.e. each external access, and, if successful, try to register each care-of address with the HA in order to establish a tunnel, one tunnel per access.

When a packet is sent from an MNN towards the Internet, it will reach the MR, as the MR is the default router for the moving network. The MR will inspect the packet in an attempt to classify what flow the packet belongs to, if it belongs to an already recorded flow, or to classify if it belongs to a previously unidentified flow. The classification is performed e.g. by looking at any flow identification (flow-ID) in the packet, and look-up if the flow-ID matches a flow-ID for an already recorded flow. Any flow-ID parameter for classifying which flow a packet belongs to may be used, such as the source and destination IP address plus at least one of e.g.:
- Source and destination port number (in a User Datagram Protocol (UDP), Transmission Control Protocol (TCP) or Stream Control Transmission Protocol (SCTP) header) plus protocol number,
- Flow label, or
- Security Parameter Index (SPI) and protocol number (which in this case will indicate a security protocol such as ESP (Encapsulating Security Payload) or AH (Authentication Header)).

Any other parameter that can be used for classifying which flow a packet belongs to, such as e.g. DiffServ code points, may also be used.

If the packet belongs to an existing flow, i.e. the packet matches a flow that has earlier been identified by the MR and the MR has a state, i.e. stored information, for the flow, the MR selects the same access as for the previous packets of the same flow, such that the packet is sent over the same tunnel as the previous packets of the same flow.

If the packet belongs to a previously unidentified flow, the MR will select access based on policies in the MR and on information in the packet, information such as one or more of the following):
- Source IP address;
- Destination IP address;
- Source port number (in a User Datagram Protocol (UDP), Transmission Control Protocol (TCP) or Stream Control Transmission Protocol (SCTP) header);
- Destination port number (in a UDP, TCP or SCTP header);
- Protocol number;
- Flow label;
- SPI.

The policies may include static rules, configured by e.g. the operator administrating the MR, consisting of e.g. selection principles, access classifications, load sharing algorithms etc. The policies may also include data of more dynamic nature, such as subscription profiles. An example of a selection principle could e.g. be that a certain application, indicated by a certain port number, should be sent over the available access link that has the highest bandwidth. Another example is that a certain real-time application, indicated by a certain port number, should be sent over the available access link that has the lowest latency. An example of an access classification could be that a satellite access is classified as a high latency access. Another example could be that an IEEE 802.11a access is classified as a high bandwidth access. An example of a simple load sharing algorithm is to allocate flows to different accesses according to round robin principles. However, once an access has been selected for a certain flow, the same access should preferably be kept for the entire lifetime of the flow. Another example of a load sharing algorithm is to strive to maintain an equivalent relative saturation of the available bandwidth of the respective available accesses. An example of information that could be included in a subscription profile could be that a concerned subscriber is allowed to use only low and medium bandwidth access like e.g. GPRS and WCDMA, whereas higher bandwidth access like IEEE 802.11a may be used for the concerned subscriber only if no accesses with lower bandwidth are available.
The MR will create a state for each new flow and store the associated forwarding such that the same tunnel can be used for a following packet classified to belong to the same flow.

When the HA receives a tunnelled packet from the MR, the HA will, according to a first embodiment of the invention create a state for this flow, store a flow-ID and also store (a reference to) the tunnel over which this packet was received. This flow state and tunnel reference will then according to the first embodiment of the invention be used for routing packets in the downlink direction for the same flow, as will now be described. I.e. the MR will implicitly instruct the HA how to route a packet belonging to the downlink part of the same flow. Of course, a flow state will only be created, and a tunnel reference will only be stored, if the packet was the first packet in this flow or if the tunnel reference has changed, or any similar change influencing the tunnel selection for the downlink part of the same flow.

When packets are routed downlink, i.e. from a correspondent node in an external network to a Mobile Network Node in the Mobile Network via the HA and the MR, the HA will attempt to classify packets to a certain flow when packets are received by the HA. If a packet is found to belong to a previously known flow, the HA will forward the packet over the same tunnel as was recorded in the state of the flow. If the packet does not match any of the stored flow states, i.e. the packet is classified as belonging to a previously unidentified flow, the HA will not take any decisions but simply forward the packet over a default tunnel towards the MR. The HA will not create any state for such a previously unidentified flow, but instead wait for the MR's decision, which for example will be indicated in the form of a packet belonging to the same flow, but to the uplink part of that flow. This packet may arrive through the same tunnel as the HA chose or another tunnel, i.e. the tunnel selection is entirely up to the MR, and the HA will follow this decision as previously described.

According to a second embodiment of the invention, the downlink part of a data flow, i.e. the direction from the HA to the MR, may use a different tunnel than the uplink part of the same flow, i.e. the direction from the MR to the HA. In this case, instead of the HA using the same flow state and tunnel reference for the downlink part as for the uplink part of the same flow, the MR will send separate instructions to the HA how to route a certain flow in the downlink direction.

Thereby, the MR will take all forwarding decisions for all flows, both uplink parts and downlink parts. The HA will just follow the decisions of the MR and make sure the downlink traffic is forwarded via the same tunnel as the uplink traffic or via a tunnel as instructed by the MR in a separate message.

### Tunnel establishment

Before packets can be routed according to the invention, a tunnel has to be established over each external access that should be able to be used for routing messages between a mobile router and a home agent in a home network.

For establishing such a tunnel for each different external access, the mobile router will have to configure a separate care-of address (CoA) for each external access that it wants to use. In figure 2, at least three different care-of addresses will be established, at least one per access technology. Although, backup external accesses may be inactive until needed.

A policy function in the MR will monitor the status of each external access, e.g. the link status of each external access, the IP configuration status of each external access

(whether it has a care-of address configured), and/or the possibility to reach some point in the network, typically the HA.

Each external access that passes all status checks will be used for tunnel establishment. For each external access a tunnel is created with the associated CoA in the MR as one endpoint and the HA as the other endpoint. The MR will register with the HA in one of the following ways:
● MR sends a separate Binding Update (for Mobile IPv6) per external access/CoA that passes the status check. The Binding Update concerning interface i comprises SA=CoAi and HoAOpt=HoA, which means Source Address = care-of address for interface i, and Home Address Option = Home Address;
● MR sends an aggregated Binding Update (BU) for all external accesses/CoAs. Initially, it should wait a short while until a few CoAs are configured and can be sent as one BU;
● MR sends a BU with all active CoAs in it as soon as something changes or the binding needs refreshment;
● The MR uses a method similar to what is described in the prior art document "Multiple Care-of Addresses Registration", draft-wakikawa-mobileip-multiplecoa-03.txt, also cited above, wherein Mobile IPv6 extensions or NEMO Basic support extensions are proposed which are designed to register multiple care-of addresses bound to a single home address. For doing so, a new identification number has to be carried in each binding for the receiver to distinguish between the bindings corresponding to the same home address;

### Routing decisions and tunnel selection

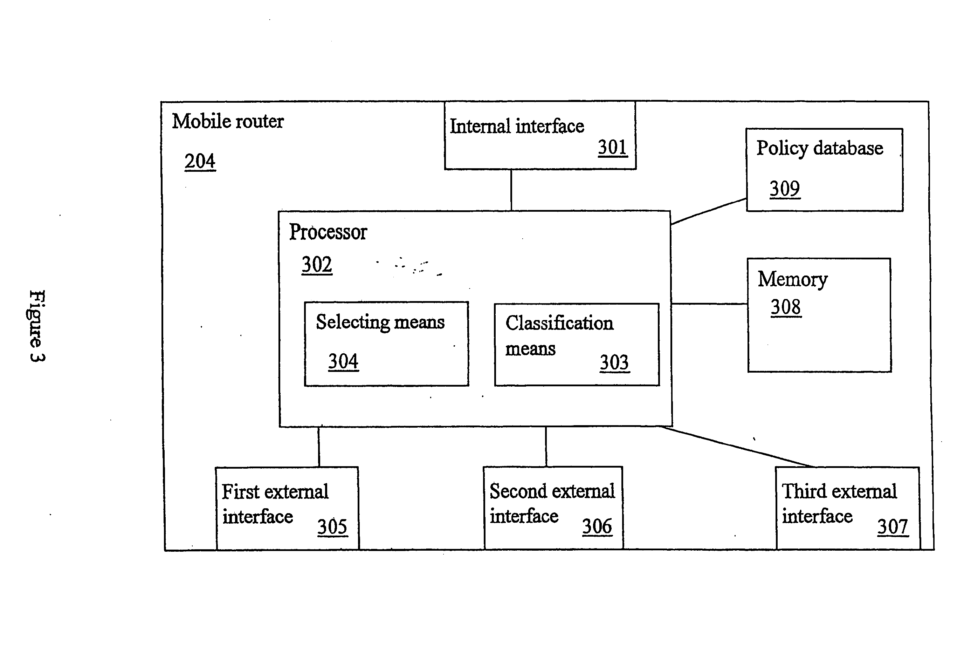

With reference to figure 3, a mobile router according to an embodiment of the invention is described. Also, the routing decisions taken by a mobile router according to an embodiment of the invention, when routing a packet from a mobile node to a home agent will be described.

The mobile router 204, which may be the mobile router described in figure 2, comprises an internal interface 301 for communicating with other nodes connected to the mobile network, e.g. the mobile network nodes, and a processor 302 for e.g. managing the communication within the mobile network and for managing the use of external accesses. The mobile router in this example also comprises, for illustrative purposes compared to figure 2, three external interfaces 305, 306, 307, one for each external access technology that the mobile router can use for getting external access. Of course, it is possible that only one external interface could be used for several accesses of the same technology, or any other possible combination of external interface and external access could be used. If compared to figure 2, a first external interface 305 may be used for getting external access to the GPRS network 211, a second external interface 306 for getting external access to the satellite communication network 212 and a third external interface 307 for getting access to the WCDMA network 213. The processor 302 has, among other things, one classification means 303 for identifying and classifying packets that are received from the mobile nodes and that are to be routed to the Home Agent 216 of the home network 215. It also has a selecting means 304 for selecting which external access that should be used for each packet based on the identification and classification made in the classification means.

A packet is received on the internal interface 301 of the MR 204. The packet is forwarded to the processor 302 wherein the processor will look up, in e.g. a memory 308, if the packet belongs to an already identified and recorded flow. If it does, the packet will be sent through the same tunnel as the previous packet in the same flow. If not, the processor will take a routing policy decision in e.g. the classification means 303, preferably aided by policies stored e.g. in a policy database 309, which could be a separate database in the mobile router or which could be situated e.g. in the memory 308. Optionally, a packet belonging to a previously unidentified flow received in the MR in the downlink direction may also trigger the MR to select a tunnel (independently of what tunnel the downlink packet was received through) and store a state for the corresponding uplink part of the flow. For an unencrypted packet, the processor 302 will take a routing policy decision for the flow and select an access based on available header fields such as source address, destination address, source port, destination port, protocol number or flow label (for IPv6 packets). For an encrypted packet a routing policy decision will be taken based on fields such as source address, destination address, Security Parameter Index (SPI) or flow label (for IPv6 packets). A more unsophisticated decision procedure may be based on e.g. the source address and the destination address or only the source address. Alternatively the decision procedure may be based on only the source and destination port numbers. The decision forms the basis for selecting, e.g. in a selecting means 304, via which external interface 305, 306, 307 the packet will be routed and further in which outgoing tunnel the packet will be transported towards the Home Agent.

When taking the routing policy decision and selecting what tunnel to use for a certain flow, the processor 302 may also take into account any routing policy configured at the MR and stored in the policy database 309. The routing policies may include e.g. subscription profiles, access classifications, selection principles, load-sharing algorithms, etc. By taking into account the current load on the respective accesses/tunnels, e.g. in a load-sharing algorithm or when identifying the access with the currently greatest unused bandwidth, the MR is able to utilize the different accesses as efficiently as possible.

The processor also creates a state, which in this case is a flow identification and a routing decision for the flow-ID, for the same input parameters for the routing decision, which state is stored e.g. in the memory 308. As mentioned above, when a subsequent packet belonging to the same flow, i.e. a packet matching the parameters of the created state, is received by the mobile router, the processor will check in the memory 308 and detect that this flow already exists, and as a result the packet will be routed over the same tunnel as the previous packets belonging to the same flow.

If a tunnel breaks, e.g. because of loss of radio contact, the MR should delete all flow-states pointing to the broken tunnel. Consequently, when the next packet of one of these flows arrives at the MR (i.e. a packet that would have matched one of the deleted flow-states), the MR finds no matching flow-state and selects a new tunnel for the flow according to the above-described principles.

An individual flow using TCP or SCTP as the transport protocol should not be load-shared over different tunnels, i.e. packets belonging to the same uplink part or downlink part of a flow should not be sent over different tunnels, as this may have negative consequences on the performance of the transport protocol Using different traffic paths for packets belonging to the same TCP flow in the same direction may also cause reordering of the packets. (e.g. TCP). As a result, the TCP sender would retransmit packets unnecessarily and also reduce its transmission rate such that the transmission performance would be lowered.

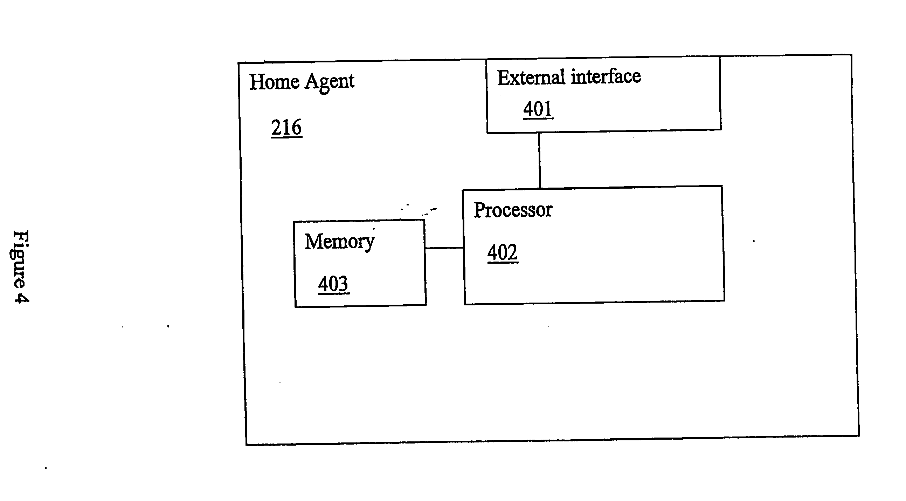

With reference to figure 4, a Home agent (HA) 216 according to the invention is shown. The home agent comprises: an external interface 401 for sending and receiving packets; a processor 402 for inspecting the received packets in order to e.g. decide over which tunnel a packet should be sent, based on routing decisions of the mobile router 204; and a memory 403 for storing flow states for previous packets.

According to an embodiment of the invention, the MR will implicitly instruct the HA how to choose external access. In this embodiment, when the home agent 216 receives via its external interface 401 an encapsulated (i.e. tunnelled) packet from the mobile router 204, the processor 402 in the home agent will inspect the packet. If the packet belongs to a flow that has previously not been identified by the home agent, the processor will create a state for the downlink part of the flow corresponding to the flow-state created by the mobile router for the uplink part of the flow, using the same principles as the mobile router, based on all of or a subset of source address, destination address, source port, destination port, protocol number and/or flow label for an unencrypted packet and based on all or a subset of source address, destination address, SPI and/or flow label for an encrypted packet. The created state will be stored in the memory 403. This flow state will be used for subsequent packets that belongs to the downlink part of the same flow, i.e. that will be sent from the HA to the MR for the same connection. According to an embodiment of the invention, the created state points out the same tunnel to use for the subsequent packets belonging to the downlink part of the same flow as was used for the received packet belonging to the uplink part of the flow.

When the Home Agent intercepts traffic going in the direction towards the mobile router, it will inspect the packet in the same way, look up a matching state in the memory 403 based on the parameters given above, and via the matching state identify the tunnel to use, which according to an embodiment of the invention will be the same tunnel as was used for the packets belonging to the uplink part of the same flow, and forward the packet to the MR via this tunnel. Through this method the Home Agent will follow the MR's policy. (I.e. in a sense the MR will be the master and the HA the slave in terms of routing policy).

If the HA cannot find a matching state for a packet directed to the mobile router, it will use a default tunnel set for the MR The MR has preferably set one tunnel to default when it registered with its home agent. If the HA has no default tunnel for the MR, it will choose a tunnel arbitrarily.

Note that the HA will not create a state for a flow based on a packet received in the direction towards the mobile router. This means that a packet destined for a mobile network node in the moving network, for which packet the HA cannot find a matching state, will not trigger the HA to create a flow-state. The HA creates its flow-states solely based on packets arriving from the mobile router. This ensures that the HA follows the routing decisions of the MR. Moreover, the MR does not have to take into account what tunnel a MNN-terminating packet belonging to a new flow arrived through, when making its tunnel selection decision.

If a tunnel breaks, the HA should delete all flow-states pointing to the broken tunnel, and subsequently arriving packets belonging to the affected flows will be treated as packets belonging to previously unidentified flows (as described above).

In an advantageous embodiment of the invention, the home agent will store the tunnel used for the uplink part of the flow, together with a flow-ID, and, when a subsequent packet in the downlink part of the flow is detected, i.e. a packet that is to be sent from the HA to the MR, the HA will choose the same tunnel as is stored for the flow ID, i.e. the same tunnel as was used for the uplink packet.

According to another embodiment of the invention, the HA may use, at the discretion of the MR, a tunnel for the downlink part of a flow (i.e. from the HA to the MR) that is independent of the tunnel used in the uplink part of the same flow (i.e. from the MR to the HA). In this case, the mobile router will send explicit routing instructions to the HA, instructions that are separate from any uplink packets for the same connection. This embodiment will also cover the case where there is a unidirectional downlink flow, i.e. a downlink part of a flow without any corresponding uplink part for the same flow.

Selecting a tunnel is equivalent to selecting a care-of address, since there is a one-to-one mapping between tunnels and care-of addresses.

The MR can send explicit instructions to the HA in e.g. the two following ways:
- Included in the Binding Update message when a care-of address is registered.
- In a new type of message any time.

If Binding Updates are used, the MR could send a Binding Update when it wants to send new or changed instructions to the HA, even if no Binding Update is needed from the NEMO Basic Support protocol perspective.

The instructions can pertain to either:
- A single care-of address (for example the care-of address that was used to convey the instructions);
- Multiple care-of addresses (which then have to be explicitly indicated in the instruction message).

The instructions can, according to one exemplary embodiment, include "selection records". Each selection record comprises:
1. A number of selection parameters (e.g. source and destination addresses, source and destination port numbers, protocol number and flow label). All or a subset of all possible selection parameters can be included. Those that are not included implicitly get the value "wildcard", which of course also could be indicated explicitly. A wildcard value is a specially reserved value for a field in a message. During a matching procedure (see below) a wildcard value would match any value.
2. A care-of address indicating the tunnel to be used for a downlink part of a flow matching the selection parameters. If the care-of address is indicated implicitly by the source address of the instruction message, then the HA fills in the care-of address in the selection record, and, optionally,
3. A priority level.

Allowing the wildcard value for selection parameters means that a single flow can potentially match more than one selection records. This can also happen even without wildcard values, if the selection parameters that are applicable to a certain flow are identical in two different selection records. The priority level is used in embodiments of the invention where identical selection records can occur, to resolve such an ambiguity. If a certain downlink part of a flow matches more than one selection record, the HA should use the selection record with the highest priority level.

If more than one matching selection record has the same (highest) priority level, then, according to an embodiment of the invention, the choice of which of these selection records to use is arbitrary. In an alternative embodiment of the invention, a (fixed) importance order between the selection parameters can be defined to use in this situation. If the HA for instance has to choose between two matching selection records having the same priority level, it first checks the selection parameter with the highest importance, then the one with the second highest importance, etc. As soon as a wildcard value is found in one selection record (and the corresponding value for the same selection parameter in the other selection record is not wildcard), then the other selection record is chosen. In this process, a selection parameter that is not applicable to the concerned flow is considered to have the wildcard value, irrespective of the value that is indicated for the parameter. An example of a non-applicable selection parameter is a port number parameter when the flow does not use a transport protocol.

Since this method for choosing tunnel for the downlink part of a flow independent of the tunnel used for the corresponding uplink p art of the same flow can co-exist with the method described earlier wherein the tunnel selection made for the uplink part of the flow is implicitly defining the tunnel to use for the downlink part of the same flow, the care-of address/tunnel selection process for the downlink part of a flow must also be able to handle interaction with/interference from this earlier described selection mechanism.

To make the interaction between the explicit instruction selection mechanism and the implicit selection mechanism work smoothly the state information records created by the implicit selection mechanism are given a (fixed) priority level. This priority level is not signalled but is always the same for all implicitly triggered state records. This priority level is placed in the middle of the priority level range. This way the implicitly triggered state records are smoothly incorporated in the selection mechanism, as they will become equivalent to the explicitly triggered selection records.

Thus, from the HA's point of view, it can receive the instructions, resulting in selection records, in different ways, explicitly or implicitly, but the same selection process is used for all downlink flows and all selection records.

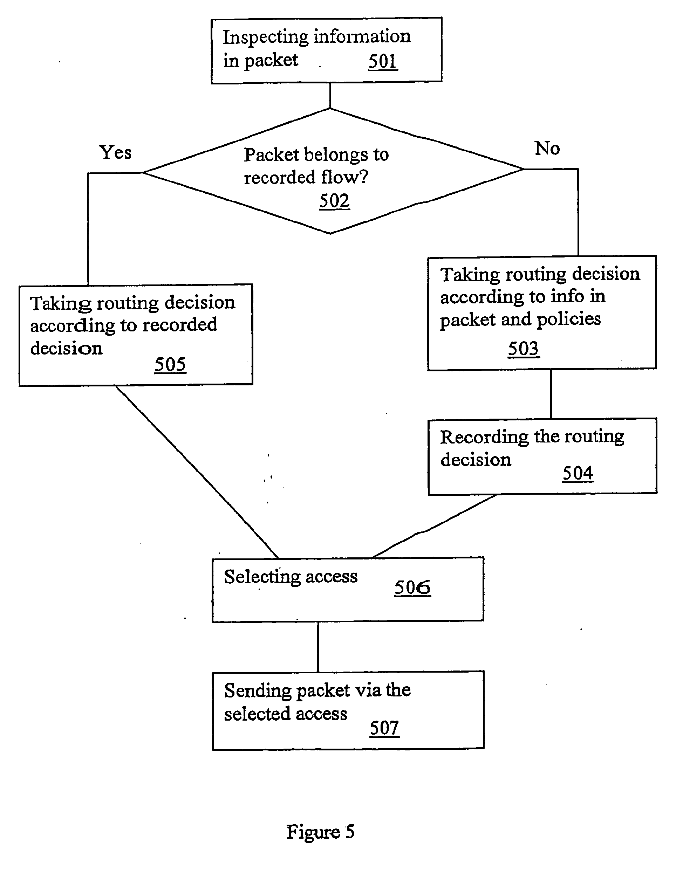

In figure 5, the method used in the mobile router for routing a packet from the mobile router to a home agent according to the invention is described in a flow chart. When a mobile router receives a packet from a communication node, it classifies the data packet according to information in the data packet. The classification procedure starts with a step of inspecting 501 information in the packet to detect whether the packet belongs to an already recorded flow. If the packet does not belong to a recorded flow 502 , e.g. if it is the first packet in the flow, a routing decision is taken 503 according to information in the data packet and preferably also according to policies residing in the mobile router. Thereafter the routing decision is recorded 504 by recording a flow state comprising the routing decision and a flow identification. If the packet is detected to belong to an already recorded flow 502, the routing decision is taken 505 according to the decision stored for the recorded flow. After the classification procedure, an access is selected 506 to be used for sending the data packet based on the classification procedure. Thereafter, the packet is sent 507 via the selected access to the home agent.

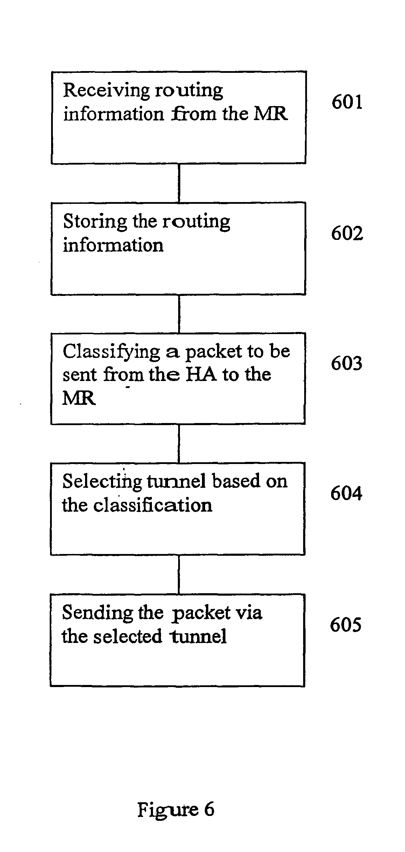

In figure 6, the method used in a home agent for routing a packet from the home agent to a mobile router according to the invention is described in a flow chart. The method starts with the home agent receiving 601 routing information from the mobile router regarding a first data packet to be sent from the HA to the MR. The routing information may either be received in a second data packet belonging to the same flow as the first data packet, but sent in the opposite direction, or it may be received in a separate instruction message. The received routing information is then stored 602 e.g. in a memory of the Home Agent together with a flow identification. Later, when the Home agent receives the first data packet from e.g. a correspondent node, the first data packet is classified 603 according to identification information of the first data packet and according to the stored information. This implies that an identification of the first data packet is found via e.g. a header of the first data packet, and that the home agent compares the first data packet identification with the identification of the information stored until a match is found. Thereafter, the tunnel to be used for sending the first data packet is selected 604 based on the stored routing information for the matched identification. At last, the first data packet is sent 605 via the selected tunnel.

Corresponding means for performing the steps according to claims 1-8 may be implemented with computer program software in a Mobile Router. Also, the corresponding means for performing the steps according to claims 9-16 may be implemented with computer program software in a Home Agent.

Although it is mainly described how to use the invention together with the NEMO basic support protocol, which is specified only for IPv6, the same mechanisms could be applied in an IPv4 environment. That is, the tunnel and flow management mechanisms of the invention can be used in the same way in an IPv4 as in an IPv6 environment.

The invention can easily be generalized to work for a single mobile communication node instead of a mobile router with a moving network. In this case, the solution would be based on Mobile IPv6 (or Mobile IPv4) instead of the NEMO basic support protocol, but the principles would be the same. When applied to a single communication node, the flow management mechanisms would be applied to the flows originating and terminating in the node itself instead of flows pertaining to mobile network nodes in a moving network. For this application, the router could be interpreted as residing internally in the single communication node. Even in the case of a single communication node, the flow management can be governed by configured policies, but it is also reasonable that the user of the communication node can affect the flow management manually, by editing the policies or selecting access for a particular flow, through a suitable interface.

As mentioned above, this invention allows the mobile router in a moving network, or a single mobile communication node, to have multiple active tunnels to increase throughput, provide better redundancy and to be able to load-balance/share the traffic, without downgrading e.g. transport layer characteristics such as TCP measurements or TCP performance by making arbitrary forwarding decisions over different paths per flow. This invention also allows the moving network (or the single node) to differentiate traffic to and from each mobile network node in the moving network (or to and from the single communication node) over different accesses. It also allows the moving network (or the single communication node) to differentiate flows over different accesses. Flows of a particular type may be forwarded over a particular access, for instance. The invention also allows the moving network (or the single communication node) to differentiate flows over different accesses based on the type of traffic, e.g. based on well-known port numbers associated with certain applications. This invention further allows the mobile router (or the single node) to make all decisions on over what access each particular flow is routed. The home agent will follow the mobile router's (or the single node's) decisions. The mobile router's decisions will be transparent to the mobile network nodes such that the mobile network nodes will not have to support multiple accesses that are available to the moving network, while still being able to use them.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A method for a mobile router (204) for routing a data packet originating from a communication node (205, 206) to a home agent (216) in a home network (215) of the mobile router (204), wherein the mobile router has ability to access at least two different external accesses (211, 212, 213) simultaneously, through which accesses one tunnel each is set up to the home agent in the home network, **characterized in** the mobile router controlling the use of external access for data packets sent in the direction to the home agent, and for data packets sent from the home agent to the mobile router, and **in that** the method comprises the steps of:
classifying the data packet according to information in the data packet;
selecting (506) one of the at least two external accesses (211, 212, 213) to be used for sending the data packet based on the classification of the packet;
sending (507) the data packet from the mobile router to the home agent via the selected external access, and
sending implicit or explicit information to the home agent regarding routing of data packets from the home agent to the mobile router.

2. A method according to claim 1 wherein the step of classifying the data packet comprises:
inspecting (501) the information in the packet to detect whether the packet belongs to a recorded flow;
taking a routing decision (503, 505), depending on the result of the inspection; and
recording (504) a flow by storing a flow state comprising the routing decision and a flow identification, if the packet does not belong to a recorded flow.

3. A method according to claim 2 wherein, if the packet belongs to a recorded flow, the routing decision is taken (505) according to the decision stored for the recorded flow.

4. A method according to claim 3, wherein the information in the packet resides in at least one field in a header associated with the data packet.

5. A method according to claim 2 or 4, wherein, if the packet does not belong to a recorded flow, the routing decision is taken (503) based on policies residing in the mobile router.

6. A method according to any of claims 2, 4 or 5, wherein, if the packet does not belong to a recorded flow, the routing decision is taken (503) based on current load on the respective external access.

7. A method according to any of claims 1-6, wherein the mobile router (204) is a router for a moving network (201) and wherein the communication node (205, 206) is a node in the moving network.

8. A method according to any of claims 1-6, wherein the mobile router (204) is residing in the communication node (205, 206).

9. A method for a home agent (216) in a home network (215) of a mobile router (204) for routing a first data packet originating from a correspondent communication node to the mobile router (204), wherein the mobile router (204) has ability to access at least two different external accesses (211, 212, 213) simultaneously, through which one tunnel each is set up to the home agent (216), **characterized in** the mobile router controlling the use of external access for data packets sent in the direction to the home agent, and for data packets sent from the home agent to the mobile router, and **in that** the method comprises the steps of:
receiving (601) information from the mobile router (204) regarding routing of the first data packet;
storing (602) the information received from the mobile router regarding routing of the first data packet;
classifying (603) the first data packet according to identification information of the first data packet and according to the stored information;
selecting (604) one of the at least two different tunnels for sending the first data packet based on the classification, and
sending (605) the first data packet to the mobile router (204) via the selected tunnel.

10. A method according to claim 9, wherein the information received from the mobile router (204) comprises identification information matching identification information of the first data packet, and a routing decision for the first data packet.

11. A method according to claim 9 or 10 wherein the information received from the mobile router (204) regarding routing of the first data packet is received in a second data packet belonging to the same flow as the first data packet but sent in the opposite direction.

12. A method according to claim 11 wherein the information received from the mobile router (204) implicitly indicates that the same tunnel should be selected for the first data packet as was used for the second data packet.

13. A method according to any of claims 9-12, wherein the information received from the mobile router (204) is received in a separate instruction message.

14. A method according to any of claims 9-12, wherein the information received from the mobile router (204) is received in a Binding Update message.

15. A method according to claim 13 or 14, wherein the information received from the mobile router (204) includes at least one selection record comprising:
a number of access selection parameter, comprising source and destination address for the first data packet; and
a care-of address indicating the tunnel to be used for sending the first data packet.

16. A method according to claim 15, wherein a priority level is given to the selection record, and the home agent (216) selects the selection record with the highest priority level, if the identification information of the first data packet matches more than one selection record.

17. A mobile router (204) for a mobile communication system, wherein the mobile router is adapted for sending a data packet originating from a communication node (205, 206) in connection with the mobile router (204) to a home agent (216) in a home network (215) of the mobile router (204), wherein the mobile router has ability to access at least two different external accesses (211, 212, 213) simultaneously, through which accesses one tunnel each is set up to the home agent (216), **characterized in that** the mobile router is adapted to control the use of external access for data packets sent in the direction to the home agent, and for data packets sent from the home agent to the mobile router;
means for classifying the data packet according to information in the data packet;
means for selecting (506) one of the at least two external accesses to be used for sending the data packet based on the classification of the packet; and
means for sending (507) the data packet to the home agent (216) via the selected external access, and implicit or explicit information to the home agent regarding routing of data packets from the home agent to the mobile router.

18. A mobile router according to claim 17, wherein the mobile router (204) also comprises means for:
inspecting (501) the information in the packet to detect whether the packet belongs to a recorded flow;
taking (503, 505) a routing decision, depending on the result of the inspection; and
recording (504) a flow by storing a flow state comprising the routing decision and a flow identification, if the packet does not belong to a recorded flow.

19. A mobile router according to claim 18, wherein, if the packet belongs to a recorded flow, the routing decision is taken (505) according to the decision stored for the recorded flow.

20. A mobile router according to claim 19, wherein the information in the packet resides in at least one field in a header associated with the data packet.

21. A mobile router according to claim 18 or 20, wherein, if the packet does not belong to a recorded flow, the routing decision is taken (503) based on policies residing in the mobile router.

22. A mobile router according to any of claims 18, 20 or 21, wherein, if the packet does not belong to a recorded flow, the routing decision is taken (503) based on current load on the respective external access (211, 212, 213).

23. A mobile router according to any of claims 17-22, wherein the mobile router (204) is a router for a moving network (201) and wherein the communication node (205, 206) is a node in the moving network.

24. A mobile router according to any of claims 17-23, wherein the mobile router (204) also comprises means for:
taking a routing decision for a data packet which data packet is to be sent from the home agent (216) to the mobile router (204); and
sending the routing decision to the home agent (216), including an identification of the data packet concerned by the routing decision.

25. A home agent for a communication system, wherein the home agent (216) is adapted to belong to a home network (215) of a mobile router (204), and wherein the home agent (216) is adapted for routing a first data packet originating from a correspondent communication node to the mobile router (204), and wherein the mobile router has ability to access at least two different external accesses (211, 212, 213) simultaneously, through which one tunnel each is set up to the home agent, **characterized in that** for enalling, the mobile router to control the use of external access for data packets sent in the direction to the home agent, and for data packets sent from the home agent to the mobile router, the home agent (216) comprises:
means for receiving (601) information from the mobile router regarding routing of the first data packet;
means for storing (602) the information received from the mobile router regarding routing of the first data packet;
means for classifying (603) the first data packet according to identification information of the first data packet and according to the stored information;
means for selecting (604) one of the at least two different tunnels for sending the first data packet based on the classification; and
means for sending (605) the first data packet to the mobile router via the selected tunnel.

26. A home agent according to claim 25, wherein the information received from the mobile router (204) comprises identification information matching identification information of the first data packet, and a routing decision for the first data packet.

27. A home agent according to claim 25 or 26, wherein the information received from the mobile router (204) implicitly indicates that the same tunnel should be selected for the first data packet as was used for the second data packet.

28. A home agent according to any of claims 25-27, wherein the information received from the mobile router (204) is received in a separate instruction message.

29. A home agent according to any of claims 25-27, wherein the information received from the mobile router (204) is received in a Binding Update message.

30. A home agent according to claim 28 or 29, wherein the information received from the mobile router (204) includes at least one selection record comprising:
a number of access selection parameters, comprising source and destination address for the first data packet; and
a care-of address indicating the tunnel to be used for sending the first data packet.

31. A home agent according to claim 30, wherein a priority level is given to the selection record, and the home agent (216) is adapted to select the selection record with the highest priority level, if the identification information of the first data packet matches more than one selection record.

32. A computer program product loadable into a memory of a digital computer device residing in a mobile router (204), wherein the computer program product comprises software code portions for performing the method of any of claims 1-8 when the computer program product is run on the computer device.

33. A computer program product loadable into a memory of a digital computer device residing in a home agent (216), wherein the computer program product comprises software code portions for performing the method of any of claims 9-16 when the computer program product is run on the computer device.

## Patentansprüche

1. Verfahren für einen Mobilrouter (204), um ein von einem Kommunikationsknoten (205, 206) ausgehendes Datenpaket an einen Heimagenten (216) in einem Heimnetz (215) des Mobilrouters (204) zu routen, worin der Mobilrouter befähigt ist, auf mindestens zwei verschiedene externe Zugänge (211, 212, 213) gleichzeitig zuzugreifen, durch welche Zugänge jeweils ein Tunnel zum Heimagenten im Heimnetz aufgebaut ist, **dadurch gekennzeichnet, dass** der Mobilrouter das Verwenden von externem Zugang für in Richtung zum Heimagenten gesendete Datenpakete und für vom Heimagenten an den Mobilrouter gesendete Datenpakete steuert, und dadurch, dass das Verfahren die folgenden Schritte umfasst:
Klassifizieren des Datenpakets gemäß Information im Datenpaket;
Auswählen (506) von einem der mindestens zwei externen Zugänge (211, 212, 213), der zum Senden des Datenpakets auf der Basis der Klassifikation des Pakets zu verwenden ist;
Senden (507) des Datenpakets vom Mobilrouter an den Heimagenten über den ausgewählten externen Zugang und
Senden von impliziter oder expliziter Information an den Heimagenten hinsichtlich Routing von Datenpaketen vom Heimagenten an den Mobilrouter.

2. Verfahren nach Anspruch 1, worin der Schritt des Klassifizierens des Datenpakets Folgendes umfasst:
Prüfen (501) der Information im Paket, um zu detektieren, ob das Paket zu einem aufgezeichneten Fluss gehört;
Treffen einer Routingentscheidung (503, 505) in Abhängigkeit vom Ergebnis der Prüfung; und
Aufzeichnen (504) eines Flusses durch Speichern eines Flusszustands, der die Routingentscheidung und eine Flussidentifikation umfasst, falls das Paket nicht zu einem aufgezeichneten Fluss gehört.

3. Verfahren nach Anspruch 2, worin, falls das Paket zu einem aufgezeichneten Fluss gehört, die Routingentscheidung gemäß der Entscheidung getroffen wird (505), die für den aufgezeichneten Fluss gespeichert ist.

4. Verfahren nach Anspruch 3, worin die Information im Paket in mindestens einem Feld in einem Header residiert, der mit dem Datenpaket assoziiert ist.

5. Verfahren nach Anspruch 2 oder 4, worin, falls das Paket nicht zu einem aufgezeichneten Fluss gehört, die Routingentscheidung auf der Basis von Policies getroffen wird (503), die im Mobilrouter residieren.

6. Verfahren nach einem der Ansprüche 2, 4 oder 5, worin, falls das Paket nicht zu einem aufgezeichnet Fluss gehört, die Routingentscheidung auf der Basis gegenwärtiger Last auf dem jeweiligen externen Zugang getroffen wird (503).

7. Verfahren nach einem der Ansprüche 1-6, worin der Mobilrouter (204) ein Router für ein bewegliches Netz (201) ist und worin der Kommunikationsknoten (205, 206) ein Knoten im beweglichen Netz ist.

8. Verfahren nach einem der Ansprüche 1-6, worin der Mobilrouter (204) im Kommunikationsknoten (205, 206) residiert.

9. Verfahren für einen Heimagenten (216) in einem Heimnetz (215) eines Mobilrouters (204), um ein von einem korrespondierenden Kommunikationsknoten ausgehendes erstes Datenpaket zum Mobilrouter (204) zu routen, worin der Mobilrouter (204) befähigt ist, auf mindestens zwei verschiedene externe Zugänge (211, 212, 213) gleichzeitig zuzugreifen, durch welche jeweils ein Tunnel zum Heimagenten (216) aufgebaut ist, **dadurch gekennzeichnet, dass** der Mobilrouter das Verwenden von externem Zugang für in Richtung zum Heimagenten gesendete Datenpakete und für vom Heimagenten an den Mobilrouter gesendete Datenpakete steuert, und dadurch, dass das Verfahren die folgenden Schritte umfasst:
Empfangen (601) von das Routing des ersten Datenpakets betreffender Information vom Mobilrouter (204);
Speichern (602) der vom Mobilrouter empfangenen Information, die das Routing des ersten Datenpakets betrifft;
Klassifizieren (603) des ersten Datenpakets gemäß Identifikationsinformation des ersten Datenpakets und gemäß der gespeicherten Information;
Auswählen (604) von einem der mindestens zwei verschiedenen Tunnels zum Senden des ersten Datenpakets auf der Basis der Klassifikation und
Senden (605) des ersten Datenpakets an den Mobilrouter (204) über den ausgewählten Tunnel.

10. Verfahren nach Anspruch 9, worin die vom Mobilrouter (204) empfangene Information Identifikationsinformation umfasst, die mit Identifikationsinformation des ersten Datenpakets übereinstimmt, und eine Routingentscheidung für das erste Datenpaket umfasst.

11. Verfahren nach Anspruch 9 oder 10, worin die vom Mobilrouter (204) empfangene Information, die das Routing des ersten Datenpakets betrifft, in einem zweiten Datenpaket empfangen wird, das zum selben Fluss gehört wie das erste Datenpaket, aber in der entgegengesetzten Richtung gesendet wird.

12. Verfahren nach Anspruch 11, worin die vom Mobilrouter (204) empfangene Information implizit anzeigt, dass derselbe Tunnel für das erste Datenpaket ausgewählt werden sollte, der für das zweite Datenpaket verwendet wurde.

13. Verfahren nach einem der Ansprüche 9-12, worin die vom Mobilrouter (204) empfangene Information in einer separaten Anweisungsnachricht empfangen wird.

14. Verfahren nach einem der Ansprüche 9-12, worin die vom Mobilrouter (204) empfangene Information in einer Binding-Aktualisierungsnachricht empfangen wird.

15. Verfahren nach Anspruch 13 oder 14, worin die vom Mobilrouter (204) empfangene Information mindestens eine Auswahlaufzeichnung enthält, Folgendes umfassend:
eine Anzahl von Zugangsauswahlparametern, die Quell- und Zieladresse für das erste Datenpaket umfassen; und
eine Care-of-Adressse, die den zum Senden des ersten Datenpakets zu verwendenden Tunnel anzeigt.

16. Verfahren nach Anspruch 15, worin der Auswahlaufzeichnung ein Prioritätsniveau gegeben wird und der Heimagent (216) die Auswahlaufzeichnung mit der höchsten Priorität auswählt, falls die Identifikationsinformation des ersten Datenpakets mit mehr als einer Auswahlaufzeichnung übereinstimmt.

17. Mobilrouter (204) für ein Mobilkommunikationssystem, worin der Mobilrouter dazu angepasst ist, ein von einem Kommunikationsknoten (205, 206) in Verbindung mit dem Mobilrouter (204) ausgehendes Datenpaket an einen Heimagenten (216) in einem Heimnetz (215) des Mobilrouters (204) zu senden, worin der Mobilrouter befähigt ist, auf mindestens zwei verschiedene externe Zugänge (211, 212, 213) gleichzeitig zuzugreifen, durch welche Zugänge jeweils ein Tunnel zum Heimagenten (216) aufgebaut ist, **dadurch gekennzeichnet, dass** der Mobilrouter dazu angepasst ist, das Verwenden von externem Zugang für in Richtung zum Heimagenten gesendete Datenpakete und für vom Heimagenten an den Mobilrouter gesendete Datenpakete zu steuern;
und durch:
Mittel zum Klassifizieren des Datenpakets gemäß Information im Datenpaket;
Mittel zum Auswählen (506) von einem der mindestens zwei externen Zugänge, der zum Senden des Datenpakets auf der Basis der Klassifikation des Pakets zu verwenden ist; und
Mittel zum Senden (507) des Datenpakets an den Heimagenten (216) über den ausgewählten externen Zugang und impliziter oder expliziter Information an den Heimagenten, die das Routen von Datenpaketen vom Heimagenten an den Mobilrouter betrifft.

18. Mobilrouter nach Anspruch 17, worin der Mobilrouter (204) auch Mittel umfasst zum:
Prüfen (501) der Information im Paket, um zu detektieren, ob das Paket zu einem aufgezeichneten Fluss gehört;
Treffen (503, 505) einer Routingentscheidung in Abhängigkeit vom Ergebnis der Prüfung; und
Aufzeichnen (504) eines Flusses durch Speichern eines Flusszustands, der die Routingentscheidung und eine Flussidentifikation umfasst, falls das Paket nicht zu einem aufgezeichneten Fluss gehört.

19. Mobilrouter nach Anspruch 18, worin, falls das Paket zu einem aufgezeichneten Fluss gehört, die Routingentscheidung gemäß der Entscheidung getroffen wird (505), die für den aufgezeichneten Fluss gespeichert ist.

20. Mobilrouter nach Anspruch 19, worin die Information im Paket in mindestens einem Feld in einem Header residiert, der mit dem Datenpaket assoziiert ist.

21. Mobilrouter nach Anspruch 18 oder 20, worin, falls das Paket nicht zu einem aufgezeichneten Fluss gehört, die Routingentscheidung auf der Basis von Policies getroffen wird (503), die im Mobilrouter residieren.

22. Mobilrouter nach einem der Ansprüche 18, 20 oder 21, worin, falls das Paket nicht zu einem aufgezeichnet Fluss gehört, die Routingentscheidung auf der Basis gegenwärtiger Last auf dem jeweiligen externen Zugang (211, 212, 213) getroffen wird (503).

23. Mobilrouter nach einem der Ansprüche 17-22, worin der Mobilrouter (204) ein Router für ein bewegliches Netz (201) ist und worin der Kommunikationsknoten (205, 206) ein Knoten im beweglichen Netz ist.

24. Mobilrouter nach einem der Ansprüche 17-23, worin der Mobilrouter (204) auch Mittel umfasst zum:
Treffen einer Routingentscheidung für ein Datenpaket, welches Datenpaket vom Heimagenten (216) an den Mobilrouter (204) zu senden ist; und
Senden der Routingentscheidung an den Heimagenten (216) einschließlich einer Identifikation des Datenpakets, das von der Routingentscheidung betroffen ist.

25. Heimagent für ein Kommunikationssystem, worin der Heimagent (216) dazu angepasst ist, zu einem Heimnetz (215) eines Mobilrouters (204) zu gehören und worin der Heimagent (216) dazu angepasst ist, ein von einem korrespondierenden Kommunikationsknoten ausgehendes erstes Datenpaket zum Mobilrouter (204) zu routen, und worin der Mobilrouter befähigt ist, auf mindestens zwei verschiedene externe Zugänge (211, 212, 213) gleichzeitig zuzugreifen, durch welche jeweils ein Tunnel zum Heimagenten aufgebaut ist, **dadurch gekennzeichnet, dass**, um dem Mobilrouter zu ermöglichen, das Verwenden von externem Zugang für Datenpakete, die in Richtung zum Heimagenten gesendet werden, und für vom Heimagenten an den Mobilrouter gesendete Datenpakete zu steuern, wobei der Heimagent (216) umfasst:
Mittel zum Empfangen (601) von das Routing des ersten Datenpakets betreffender Information vom Mobilrouter;
Mittel zum Speichern (602) der vom Mobilrouter empfangenen Information, die das Routing des ersten Datenpakets betrifft;
Mittel zum Klassifizieren (603) des ersten Datenpakets gemäß Identifikationsinformation des ersten Datenpakets und gemäß der gespeicherten Information;
Mittel zum Auswählen (604) von einem der mindestens zwei verschiedenen Tunnels zum Senden des ersten Datenpakets auf der Basis der Klassifikation; und
Mittel zum Senden (605) des ersten Datenpakets an den Mobilrouter über den ausgewählten Tunnel.

26. Heimagent nach Anspruch 25, worin die vom Mobilrouter (204) empfangene Information Identifikationsinformation umfasst, die mit Identifikationsinformation des ersten Datenpakets übereinstimmt, und eine Routingentscheidung für das erste Datenpaket umfasst.

27. Heimagent nach Anspruch 25 oder 26, worin die vom Mobilrouter (204) empfangene Information implizit anzeigt, dass derselbe Tunnel für das erste Datenpaket ausgewählt werden sollte, der für das zweite Datenpaket verwendet wurde.

28. Heimagent nach einem der Ansprüche 25-27, worin die vom Mobilrouter (204) empfangene Information in einer separaten Anweisungsnachricht empfangen wird.

29. Heimagent nach einem der Ansprüche 25-27, worin die vom Mobilrouter (204) empfangene Information in einer Binding-Aktualisierungsnachricht empfangen wird.

30. Heimagent nach Anspruch 28 oder 29, worin die vom Mobilrouter (204) empfangene Information mindestens eine Auswahlaufzeichnung enthält, Folgendes umfassend:
eine Anzahl von Zugangsauswahlparametern, die Quell- und Zieladresse für das erste Datenpaket umfassen; und
eine Care-of-Adressse, die den zum Senden des ersten Datenpakets zu verwendenden Tunnel anzeigt.

31. Heimagent nach Anspruch 30, worin der Auswahlaufzeichnung ein Prioritätsniveau gegeben wird und der Heimagent (216) dazu angepasst ist, die Auswahlaufzeichnung mit der höchsten Priorität auszuwählen, falls die Identifikationsinformation des ersten Datenpakets mit mehr als einer Auswahlaufzeichnung übereinstimmt.

32. Computerprogrammprodukt, ladefähig auf einen Speicher einer digitalen Computereinrichtung, die in einem Mobilrouter (204) residiert, worin das Computerprogrammprodukt Softwarecodeteile umfasst, um das Verfahren nach einem der Ansprüche 1-8 auszuführen, wenn das Computerprogrammprodukt auf der Computereinrichtung abläuft.

33. Computerprogrammprodukt, ladefähig auf einen Speicher einer digitalen Computereinrichtung, die in einem Heimagenten (216) residiert, worin das Computerprogrammprodukt Softwarecodeteile umfasst, um das Verfahren nach einem der Ansprüche 9-16 auszuführen, wenn das Computerprogrammprodukt auf der Computereinrichtung abläuft.

## Revendications

1. Procédé pour un routeur mobile (204) destiné à acheminer un paquet de données provenant d'un noeud de communication (205, 206) vers un point de rattachement (216) dans un réseau de rattachement (215) du routeur mobile (204), dans lequel le routeur mobile a la capacité d'accéder à au moins deux accès externes distincts (211, 212, 213) simultanément, où un tunnel à travers chaque accès est établi vers le point de rattachement dans le réseau de rattachement, **caractérisé en ce que** le routeur mobile commande l'utilisation de l'accès externe pour des paquets de données envoyés dans la direction du point de rattachement, et pour des paquets de données envoyés du point de rattachement au routeur mobile, et **en ce que** le procédé comprend les étapes ci-dessous consistant à :
classer le paquet de données selon les informations contenues dans le paquet de données;
sélectionner (506) l'un desdits au moins deux accès externes (211, 212, 213) à utiliser pour envoyer le paquet de données sur la base de la classification du paquet ;
envoyer (507) le paquet de données du routeur mobile au point de rattachement par l'intermédiaire de l'accès externe sélectionné ; et
envoyer des informations implicites ou explicites au point de rattachement, lesquelles sont connexes à l'acheminement de paquets de données du point de rattachement au routeur mobile.

2. Procédé selon la revendication 1, dans lequel l'étape de classification du paquet de données comprend les étapes ci-dessous consistant à :
inspecter (501) les informations contenues dans le paquet en vue de détecter si le paquet appartient à un flux enregistré;
prendre une décision d'acheminement (503, 505), en fonction du résultat de l'inspection ; et
enregistrer (504) un flux en stockant un état de flux comportant la décision d'acheminement et une identification de flux, si le paquet n'appartient pas à un flux enregistré.

3. Procédé selon la revendication 2, dans lequel, si le paquet appartient à un flux enregistré, la décision d'acheminement est prise (505) selon la décision stockée pour le flux enregistré.

4. Procédé selon la revendication 3, dans lequel les informations contenues dans le paquet résident dans au moins un champ dans un en-tête associé au paquet de données.

5. Procédé selon la revendication 2 ou 4, dans lequel, si le paquet n'appartient pas à un flux enregistré, la décision d'acheminement est prise (503) sur la base de règles résidant dans le routeur mobile.

6. Procédé selon l'une quelconque des revendications 2, 4 ou 5, dans lequel, si le paquet n'appartient pas à un flux enregistré, la décision d'acheminement est prise (503) sur la base d'une charge en cours sur l'accès externe respectif.

7. Procédé selon l'une quelconque des revendications 1 à 6, dans lequel le routeur mobile (204) est un routeur pour un réseau mobile (201) et dans lequel le noeud de communication (205, 206) est un noeud dans le réseau mobile.

8. Procédé selon l'une quelconque des revendications 1 à 6, dans lequel le routeur mobile (204) réside dans le noeud de communication (205, 206).

9. Procédé pour un point de rattachement (216) dans un réseau de rattachement (215) d'un routeur mobile (204) destiné à acheminer un premier paquet de données provenant d'un noeud de communication correspondant vers le routeur mobile (204), dans lequel le routeur mobile (204) a la capacité d'accéder à au moins deux accès externes distincts (211, 212, 213) simultanément, où un tunnel à travers chaque accès est établi vers le point de rattachement (216), **caractérisé en ce que** le routeur mobile commande l'utilisation de l'accès externe pour des paquets de données envoyés dans la direction du point de rattachement, et pour des paquets de données envoyés du point de rattachement au routeur mobile, et **en ce que** le procédé comprend les étapes ci-dessous consistant à :
recevoir (601) des informations en provenance du routeur mobile (204), connexes à l'acheminement du premier paquet de données ;
stocker (602) les informations reçues à partir du routeur mobile, connexes à l'acheminement du premier paquet de données ;
classer (603) le premier paquet de données selon des informations d'identification du premier paquet de données et selon les informations stockées ;
sélectionner (604) l'un desdits au moins deux tunnels distincts en vue d'envoyer le premier paquet de données sur la base de la classification ; et
envoyer (605) le premier paquet de données au routeur mobile (204) par l'intermédiaire du tunnel sélectionné.

10. Procédé selon la revendication 9, dans lequel les informations reçues à partir du routeur mobile (204) comprennent des informations d'identification correspondant à des informations d'identification du premier paquet de données, et une décision d'acheminement pour le premier paquet de données.

11. Procédé selon la revendication 9 ou 10, dans lequel les informations reçues à partir du routeur mobile (204) connexes à l'acheminement du premier paquet de données sont reçues dans un second paquet de données appartenant au même flux que le premier paquet de données, mais envoyé dans la direction opposée.

12. Procédé selon la revendication 11, dans lequel les informations reçues à partir du routeur mobile (204) indiquent implicitement que le même tunnel que celui utilisé pour le second paquet de données doit être sélectionné pour le premier paquet de données.

13. Procédé selon l'une quelconque des revendications 9 à 12, dans lequel les informations reçues à partir du routeur mobile (204) sont reçues dans un message d'instruction individuel.

14. Procédé selon l'une quelconque des revendications 9 à 12, dans lequel les informations reçues à partir du routeur mobile (204) sont reçues dans un message de mise à jour d'association.

15. Procédé selon la revendication 13 ou 14, dans lequel les informations reçues à partir du routeur mobile (204) comportent au moins un enregistrement de sélection comprenant :
un nombre de paramètres de sélection d'accès comprenant une adresse de destination et source pour le premier paquet de données ; et
une adresse au bon soin indiquant le tunnel à utiliser pour l'envoi du premier paquet de données.

16. Procédé selon la revendication 15, dans lequel un niveau de priorité est donné à l'enregistrement de sélection, et le point de rattachement (216) sélectionne l'enregistrement de sélection présentant le niveau de priorité le plus élevé, si les informations d'identification du premier paquet de données correspondent à plus d'un enregistrement de sélection.

17. Routeur mobile (204) pour un système de communication mobile, dans lequel le routeur mobile est apte à envoyer un paquet de données provenant d'un noeud de communication (205, 206) conjointement avec le routeur mobile (204) à un point de rattachement (216) dans un réseau de rattachement (215) du routeur mobile (204), dans lequel le routeur mobile a la capacité d'accéder à au moins deux accès externes distincts (211, 212, 213) simultanément, où un tunnel à travers chaque accès est établi vers le point de rattachement (216), **caractérisé en ce que** le routeur mobile est apte à commander l'utilisation de l'accès externe pour des paquets de données envoyés dans la direction du point de rattachement, et pour des paquets de données envoyés du point de rattachement au routeur mobile,
et **caractérisé par** :
un moyen pour classer le paquet de données selon les informations contenues dans le paquet de données ;
un moyen pour sélectionner (506) l'un desdits au moins deux accès externes à utiliser pour envoyer le paquet de données sur la base de la classification du paquet ; et
un moyen pour envoyer (507) le paquet de données au point de rattachement (216) par l'intermédiaire de l'accès externe sélectionné, et des informations implicites ou explicites au point de rattachement, lesquelles sont connexes à l'acheminement de paquets de données du point de rattachement au routeur mobile.

18. Routeur mobile selon la revendication 17, dans lequel le routeur mobile (204) comprend en outre un moyen pour :
inspecter (501) les informations contenues dans le paquet en vue de détecter si le paquet appartient à un flux enregistré ;
prendre (503, 505) une décision d'acheminement, en fonction du résultat de l'inspection ; et
enregistrer (504) un flux en stockant un état de flux comportant la décision d'acheminement et une identification de flux, si le paquet n'appartient pas à un flux enregistré.

19. Routeur mobile selon la revendication 18, dans lequel, si le paquet appartient à un flux enregistré, la décision d'acheminement est prise (505) selon la décision stockée pour le flux enregistré.

20. Routeur mobile selon la revendication 19, dans lequel les informations contenues dans le paquet résident dans au moins un champ dans un en-tête associé au paquet de données.

21. Routeur mobile selon la revendication 18 ou 20, dans lequel, si le paquet n'appartient pas à un flux enregistré, la décision d'acheminement est prise (503) sur la base de règles résidant dans le routeur mobile.

22. Routeur mobile selon l'une quelconque des revendications 18, 20 ou 21, dans lequel, si le paquet n'appartient pas à un flux enregistré, la décision d'acheminement est prise (503) sur la base d'une charge en cours sur l'accès externe respectif (211, 212, 213).

23. Routeur mobile selon l'une quelconque des revendications 17 à 22, dans lequel le routeur mobile (204) est un routeur pour un réseau mobile (201) et dans lequel le noeud de communication (205, 206) est un noeud dans le réseau mobile.

24. Routeur mobile selon l'une quelconque des revendications 17 à 23, dans lequel le routeur mobile (204) comprend en outre un moyen pour :
prendre une décision d'acheminement pour un paquet de données, lequel paquet de données doit être envoyé du point de rattachement (216) au routeur mobile (204) ; et
envoyer la décision d'acheminement au point de rattachement (216), y compris une identification du paquet de données concerné par la décision d'acheminement.

25. Point de rattachement pour un système de communication, dans lequel le point de rattachement (216) est apte à appartenir à un réseau de rattachement (215) d'un routeur mobile (204), et dans lequel le point de rattachement (216) est apte à acheminer un premier paquet de données provenant d'un noeud de communication correspondant vers le routeur mobile (204), et dans lequel le routeur mobile a la capacité d'accéder à au moins deux accès externes distincts (211, 212, 213) simultanément, où un tunnel à travers chaque accès est établi vers le point de rattachement, **caractérisé en ce que**, pour permettre au routeur mobile de commander l'utilisation de l'accès externe pour des paquets de données envoyés dans la direction du point de rattachement, et pour des paquets de données envoyés du point de rattachement au routeur mobile, le point de rattachement (216) comporte :
un moyen pour recevoir (601) des informations en provenance du routeur mobile, connexes à l'acheminement du premier paquet de données ;
un moyen pour stocker (602) les informations reçues à partir du routeur mobile, connexes à l'acheminement du premier paquet de données ;
un moyen pour classer (603) le premier paquet de données selon des informations d'identification du premier paquet de données et selon les informations stockées ;
un moyen pour sélectionner (604) l'un desdits au moins deux tunnels distincts en vue d'envoyer le premier paquet de données sur la base de la classification ; et
un moyen pour envoyer (605) le premier paquet de données au routeur mobile par l'intermédiaire du tunnel sélectionné.

26. Point de rattachement selon la revendication 25, dans lequel les informations reçues à partir du routeur mobile (204) comprennent des informations d'identification correspondant à des informations d'identification du premier paquet de données, et une décision d'acheminement pour le premier paquet de données.

27. Point de rattachement selon la revendication 25 ou 26, dans lequel les informations reçues à partir du routeur mobile (204) indiquent implicitement que le même tunnel que celui utilisé pour le second paquet de données doit être sélectionné pour le premier paquet de données.

28. Point de rattachement selon l'une quelconque des revendications 25 à 27, dans lequel les informations reçues à partir du routeur mobile (204) sont reçues dans un message d'instruction individuel.

29. Point de rattachement selon l'une quelconque des revendications 25 à 27, dans lequel les informations reçues à partir du routeur mobile (204) sont reçues dans un message de mise à jour d'association.

30. Point de rattachement selon la revendication 28 ou 29, dans lequel les informations reçues à partir du routeur mobile (204) comportent au moins un enregistrement de sélection comprenant :
un nombre de paramètres de sélection d'accès comprenant une adresse de destination et source pour le premier paquet de données ; et
une adresse au bon soin indiquant le tunnel à utiliser pour l'envoi du premier paquet de données.

31. Point de rattachement selon la revendication 30, dans lequel un niveau de priorité est donné à l'enregistrement de sélection, et le point de rattachement (216) est apte à sélectionner l'enregistrement de sélection présentant le niveau de priorité le plus élevé, si les informations d'identification du premier paquet de données correspondent à plus d'un enregistrement de sélection.

32. Produit-programme informatique pouvant être chargé dans une mémoire d'un dispositif informatique numérique résidant dans un routeur mobile (204), dans lequel le produit-programme informatique comprend des parties de code logiciel pour mettre en oeuvre le procédé selon l'une quelconque des revendications 1 à 8, lorsque le produit-programme informatique est exécuté sur le dispositif informatique.

33. Produit-programme informatique pouvant être chargé dans une mémoire d'un dispositif informatique numérique résidant dans un point de rattachement (216), dans lequel le produit-programme informatique comprend des parties de code logiciel pour mettre en oeuvre le procédé selon l'une quelconque des revendications 9 à 16, lorsque le produit-programme informatique est exécuté sur le dispositif informatique.
